# EUROPÄISCHE PATENTANMELDUNG

(11) **EP 4 502 833 A1**
(43) Veröffentlichungstag der Anmeldung: **05.02.2025**
(21) Anmeldenummer: 23188994.0
(22) Anmeldetag: 01.08.2023
(51) Int. Cl.: G06F 21/30, G06F 21/44, G01R 31/00

(54) **VERFAHREN ZUM BEWERTEN EINES ZUSTANDS EINES ELEKTRONISCHEN BAUTEILS EINER SCHALTUNGSANORDNUNG, COMPUTERPROGRAMMPRODUKT, COMPUTERLESBARES SPEICHERMEDIUM SOWIE BEWERTUNGSVORRICHTUNG**

(71) Anmelder: Siemens Aktiengesellschaft, 80333 München (DE)
(72) Erfinder: Spinnler, Christian, 91052 Erlangen (DE); Engel, Thomas, 73432 Aalen (DE)
(74) Vertreter: Siemens Patent Attorneys

(57) **Zusammenfassung**

Die Erfindung betrifft ein Verfahren zum Bewerten eines Zustands eines elektronischen Bauteils (12, 14) einer Schaltungsanordnung (10) mittels einer Bewertungsvorrichtung (16), mit den Schritten:
- Vorgeben eines Soll-Augendiagramms (48) für das elektronische Bauteil (12, 14) mittels einer elektronischen Recheneinrichtung (36) der Bewertungsvorrichtung (16);
- Erfassen von zumindest einem aktuellen Signal (24) des elektronischen Bauteils (12, 14) mittels einer Erfassungseinrichtung (26) der Bewertungsvorrichtung (16);
- Erzeugen eines aktuellen Ist-Augendiagramms (28) des elektronischen Bauteils (12, 14) in Abhängigkeit von dem erfassten, aktuellen Signal (24) mittels der elektronischen Recheneinrichtung (36);
- Vergleichen des Soll-Augendiagramms (48) mit dem Ist-Augendiagramm (28) mittels der elektronischen Recheneinrichtung (36); und
- Bewerten des Zustands in Abhängigkeit von dem Vergleich mittels der elektronischen Recheneinrichtung (36). Ferner betrifft die Erfindung ein Computerprogrammprodukt, ein computerlesbares Speichermedium sowie eine Bewertungsvorrichtung (36).

## Beschreibung

Die Erfindung betrifft ein Verfahren zum Bewerten eines Zustands eines elektronischen Bauteils einer Schaltungsanordnung mittels einer Bewertungsvorrichtung gemäß dem geltenden Patentanspruch 1. Ferner betrifft die Erfindung ein Computerprogrammprodukt, ein computerlesbares Speichermedium sowie eine Bewertungsvorrichtung.

Durch die zunehmende Vernetzung von Geräten, dem Internet der Dinge (IoT) und der Industrialisierung 4.0 und die dadurch steigende Anzahl an möglichen Angriffsvektoren nimmt die Bedrohung durch böswillige Akteure stetig zu. Noch dazu steigt die Anzahl der böswilligen Akteure selbst in Zeiten von Krise und Krieg. Die Kenntnis dieser Gefahren erfordert das Ergreifen einer Vielzahl von Maßnahmen, um die Sicherheit, mit Bezug auf IT-Sicherheit und Ausfallsicherheit, vernetzter und insbesondre kritischer Infrastruktur weiterhin zu gewährleisten.

In vielen Bereichen sind bereits etablierte Sicherheitsmechanismen in vernetzte Geräte eingeflossen, um Assets unterschiedlichster Art vor Cyber-Angriffen zu schützen. So wird beispielsweise die Identifizierung von Geräten oftmals durch eine Public-Key-Infrastruktur (PKI) gehandhabt. Hierbei werden im Herstellungsprozess vertrauenswürdige Zertifikate auf die Geräte gespielt, welche im Betrieb zur Identifizierung und Authentifizierung genutzt werden. Die Nutzung von Trusted Platform Modules (TPM) oder von Trusted Execution Environments (TEE) stärkt zudem die Vertrauenswürdigkeit von Geräten, deren Prozessoren und der installierten Software. Mit Blick auf das Device-Lifecycle-Management ist es wichtig, alternde oder defekte Komponenten zu erkennen, um so möglichst geringe Standzeiten und eine hohe Verfügbarkeit der Anlagen zu gewährleisten. Neben einfach zu detektierenden Ausfallerscheinungen können durch Alterung auch schwieriger zu erkennende Fehler, wie z.B. Timingfehler, Drifts oder Offsets in Messdaten auftreten. Diese Art von Fehler kann sich unter Umständen unerkannt fortpflanzen und zu Fehlentscheidungen führen.

In vielen Bereichen von IoT und Industrie 4.0 ist Security und Zustandsüberwachung dementsprechend noch Gegenstand der Forschung. Die stetige Weiterentwicklung und Veränderung von Netzwerken und die Erforschung von neuen Einsatzmöglichkeiten für IoT Geräten führt zu neuen Angriffsvektoren und Fehlerquellen, welche wiederum zu einer regelmäßigen Überarbeitung der Sicherheitskonzepte und Maßnahmen führen muss. Mit der Entwicklung hin zur IT/OT-Convergence bedarf es erweiterte Sicherheitskonzepte, um die Integrität, Authentizität und die Robustheit von Daten der jeweiligen Assets zu gewährleisten, welche je nach Anwendung zum Messen oder Steuern von verschiedenen Eingangs- und Ausgangsgrößen genutzt werden. Eine Vernachlässigung dieser kann bei betroffenen Unternehmen zu enormen finanziellen Schäden oder Reputationsverlust führen. Diese können z.B. verursacht sein durch Plagiate, Datenlecks, dem Ausfallen der gesamten Infrastruktur, Fehlsteuerung oder der Zerstörung ganzer Anlagen.

Deshalb bedarf es einer Ausdehnung der Sicherheitskonzepte hin zu einer ganzheitlichen Überprüfung von Hardware- und Software-Komponenten. Smarte, vernetzte Geräte bestehen nicht nur aus einem Prozessor, einem Kommunikationsmodul und einer Software, sondern aus einer Vielzahl von weiteren heterogenen Bauelementen, wie z.B. Speichermodulen, Schnittstellen, Sensoren oder digital/analog-Wandlern, welche alle für die Erfüllung einer bestimmten Aufgabe nötig sind. Insbesondere Sensoren sind nicht immer auf einer Platine in einem zugangsgesicherten Gehäuse verbaut, sondern können auch über eine Kabelverbindung an ein Gerät angeschlossen werden und sind somit exponiert und zugänglich für Angreifer oder Umwelteinflüsse. Außerdem sind auch zugangsgesicherte Gehäuse eine Seltenheit, sodass auch intern verbaute Komponenten als exponiert gelten können.

In Zeiten der Chip-Krise, Lieferketten-Engpässen und Cyber-Attacken und der zunehmenden Digitalisierung kritischer Infrastruktur, ist eine Überprüfung solcher Komponenten von hoher Bedeutung. Diese könnten ausgetauscht und durch bösartige ersetzt werden. Das kann z.B. dazu führen, dass nicht nur Daten an das vorgesehen Gateway gesendet werden, sondern auch zu einem Angreifer. Außerdem könnten Messdaten verfälscht werden, was wiederum zu falschen Entscheidungen oder Steuerbefehlen führen könnte. Im schlimmsten Fall kann dies einen der der vorherigen genannten Schäden nach sich ziehen.

Aufgabe der vorliegenden Erfindung ist es, ein Verfahren, ein Computerprogrammprodukt, ein computerlesbares Speichermedium sowie eine Bewertungsvorrichtung zu schaffen, mittels welchen verbessert ein Zustand eines elektronischen Bauteils bewertet werden kann.

Diese Aufgabe wird durch ein Verfahren, ein Computerprogrammprodukt, ein computerlesbares Speichermedium sowie eine Bewertungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bewerten eines Zustands eines elektronischen Bauteils einer Schaltungsanordnung mittels einer Bewertungsvorrichtung. Es wird ein Soll-Augendiagramm für das elektronische Bauteil mittels einer elektronischen Recheneinrichtung der Bewertungsvorrichtung vorgegeben. Es erfolgt das Erfassen von zumindest einem aktuellen Signal des elektronischen Bauteils mittels einer Erfassungseinrichtung der Bewertungsvorrichtung. Es wird ein aktuelles Ist-Augendiagramm des elektronischen Bauteils in Abhängigkeit von dem erfassten, aktuellen Signal mittels der elektronischen Recheneinrichtung erzeugt. Es wird das Soll-Augendiagramm mit dem Ist-Augendiagramm mittels der elektronischen Recheneinrichtung vergleichen, und es erfolgt ein Bewerten des Zustands in Abhängigkeit von dem Vergleich mittels der elektronischen Recheneinrichtung.

Somit kann verbessert auf Basis des Augendiagramms der Zustand des elektronischen Bauteils bewertet werden.

Für ein Augendiagramm, welches auch als Eye-Diagram bezeichnet werden kann, können verschiedene Analysen herangezogen werden. Im klassischen Sinne wird ein Augendiagramm dazu genutzt, um die Signalqualität einer hochfrequenten digitalen Datenübertragung zu beurteilen. Dies wird durch die analysespezifischen Amplituden- und Timing-Merkmale des Augendiagramms erreicht, wie zum Beispiel die Augenamplitude, eine Augenöffnung sowie eine Augenbreite. Diese Merkmale lassen eine Beurteilung der Übertragungsqualität eines Kanals zu und ist somit ein Indikator für die korrekte Funktionalität eines Geräts. Eine Überprüfung des Augendiagramms wird deshalb häufig bei einer Warenausgangsprüfung durchgeführt. Das Augendiagramm hat viele Einflussgrößen, dazu gehören neben generell unerwünschten Einflussgrößen, wie Temperatur oder Alterung, auch baugruppen- beziehungsweise komponentenspezifische Eigenschaften. Zu diesen Eigenschaften gehören unter anderem parasitäre Kapazität oder Widerstand, Leitungslänge oder Reaktionszeit von Komponenten.

Ein jedes digitale Signal hat insbesondere spezifische Charakteristiken, wie beispielsweise Jitter, Flankensteilheit, Verzerrung und Signal-zu-Rausch-Verhältnis. Erfindungsgemäß werden nun diese Charakteristiken des Augendiagramms genutzt, um eine kontinuierliche Überprüfung vom elektronischen Bauteil während der gesamten Lebenszeit zu ermöglichen. Diese Überprüfung umfasst zum einen die Zustandsüberwachung der elektronischen Komponente beziehungsweise des elektronischen Bauteils, um frühzeitig solche zu identifizieren, welche nahe dem Ende ihrer Lebensdauer sind. Zum anderen kann das Augendiagramm zur Identifizierung und Authentifizierung genutzt werden. Hierbei kann beispielsweise ein "Fingerprint" von dem Augendiagramm erzeugt werden, welcher eindeutig ist und gegenüber beispielsweise entsprechenden Einrichtungen, gegenüber welchen sich das elektronische Bauteil zu authentifizieren hat, zur Authentifizierung und Integritätsprüfung genutzt werden kann.

Insbesondere kann durch die technischen Maßnahmen somit sichergestellt werden, dass nur eine vertrauenswürdige Peripherie an eine elektronische Recheneinrichtung angeschlossen ist beziehungsweise keine bösartigen Komponenten über den Lebenszyklus des Geräts verbaut werden. Ebenso ist es möglich, die Alterung von elektronischen Bauelementen zu erfassen und entsprechende Wartungsarbeiten zu organisieren.

Gemäß einer vorteilhaften Ausgestaltungsform wird ein Alterungszustand des elektronischen Bauteils als der Zustand bewertet. Insbesondere kann auf Basis des Soll-Augendiagramms ein Neuzustand identifiziert werden. Im Laufe der Lebenszeit des elektronischen Bauteils verändert sich das Augendiagramm, beispielsweise kann sich eine Flankensteilheit im Signal entsprechend verändern, und auf Basis dessen kann der Alterungszustand zuverlässig bewertet beziehungsweise beobachtet werden. Somit lässt sich mittels des Augendiagramms zuverlässig der Alterungszustand bewerten.

Bei einer weiteren vorteilhaften Ausgestaltungsform ist vorgesehen, dass ein Gesundheitszustand des elektronischen Bauteils als der Zustand bewertet wird. Insbesondere kann neben dem Alterungszustand auch der sogenannte Gesundheitszustand entsprechend bestimmt werden. Dies kann auch auf Basis bestimmter Charakteristika, insbesondere beispielsweise Flankensteilheit, Jitter oder dergleichen im entsprechenden Signal bestimmt werden. Insbesondere handelt es sich bei dem Gesundheitszustand um einen Zustand, der auf Basis von aktuellen Einflüssen eintritt. Beim Alterungszustand handelt es sich insbesondere um einen Zustand, der auf Basis einer Nutzung des elektronischen Bauteils entsprechend angepasst wird. Beispielsweise kann der Alterungszustand abhängig von Zeitzyklen sein, während der Gesundheitszustand abhängig von degradierten Teilen eintreten kann.

Eine weitere vorteilhafte Ausgestaltungsform sieht vor, dass auf Basis des Vergleichs das elektronische Bauteil identifiziert wird. Insbesondere sind Augendiagramme individuell. Es kann dann das Soll-Augendiagramm für ein spezifisches elektronisches Bauteil vorgegeben werden. Auf Basis des Ist-Augendiagramms und des Vergleichs mit dem Soll-Augendiagramm kann nun verglichen werden, ob es sich bei dem elektronischen Bauteil auch um dieses Bauteil handelt, mittels welchem das Soll-Augendiagramm erzeugt wurde. Sollte es zu einem Austausch eines elektronischen Bauteils kommen, so kann dies durch den Vergleich zuverlässig identifiziert werden. Insbesondere können somit eine Authentifizierung und Integritätsprüfung auf Basis der korrekten Identifikation durchgeführt werden.

Ferner hat es sich als vorteilhaft erwiesen, wenn zur Identifizierung des elektronischen Bauteils das Soll-Augendiagramm in Abhängigkeit von einem bestimmten Alterungszustand angepasst wird. Dies hat insbesondere den Vorteil, dass sich auf Basis der Alterung des elektronischen Bauteils das Soll-Augendiagramm verändern kann. Es ist somit insbesondere vorgesehen, dass beispielsweise in vorgeschriebenen Zeitabständen ein neues Soll-Augendiagramm erzeugt wird. Insbesondere ist dies alterungszustandsabhängig angepasst, wodurch auch über den Betriebszustand beziehungsweise der Betriebslaufzeit des elektronischen Bauteils hinaus zuverlässig die Identifikation stattfinden kann und insbesondere somit Alterungszustände mitberücksichtigt werden können. Dadurch kann zuverlässig die Identifizierung des elektronischen Bauteils über die Lebenszeit durchgeführt werden.

In einer weiteren vorteilhaften Ausgestaltungsform ist vorgesehen, dass mittels eines Fuzzy-Extraktors die Identifizierung und/oder Authentifizierung durchgeführt wird. Insbesondere kann, um die Identifizierung beziehungsweise Authentifizierung auch bei der Alterung der Hardware zu gewährleisten, der Alterungsprozess entsprechend mitabgebildet werden. Hierzu wird ein Fuzzy-Extraktor genutzt, um aus verrauschten Daten einen zur Identifizierung/Authentifizierung geeigneten Schlüssel zu erzeugen. Es gehört zu den Eigenschaften des Fuzzy-Extraktors, dass er eine gewissen Fehlertoleranz aufweist. Je nach Alterungsgrad der Hardware kann es allerdings dazu kommen, dass der mit den beim Enrollment erzeugten Features erstellte Fuzzy-Extraktor nicht mehr genutzt werden kann, da sich die statistische Verteilung der Features langsam und kontinuierlich aus der Ursprungsverteilung bewegt. Um dies zu verhindern, ist es insbesondere notwendig, den während des Enrollment erzeugten Mittelpunkt der validen Features regelmäßig zu korrigieren, um dadurch Alterungseffekte auszugleichen.

Ferner hat es sich als vorteilhaft erwiesen, wenn auf Basis einer Augenamplitude im Augendiagram und/oder einer Augenöffnung im Augendiagramm und/oder einer Augenbreite des Augendiagrams der Vergleich durchgeführt wird. Insbesondere handelt es sich dabei um die entsprechenden Charakteristiken im Augendiagramm. Diese sind bauteilspezifisch, und eine entsprechende Veränderung in der Augenamplitude und/oder der Augenöffnung und/oder der Augenbreite kann dazu genutzt werden, um entsprechend den Zustand, beispielsweise die Alterung, die Gesundheit und Identifizierung durchführen zu können. Somit kann auf einfache Art und Weise der Zustand des elektronischen Bauteils bewertet werden.

Es hat sich ferner als vorteilhaft erwiesen, wenn das Signal mittels eines Analog-Digital-Wandlers erfasst wird. Insbesondere kann beispielsweise vorgesehen sein, dass das Augendiagramm über einen entsprechenden Messaufbau relativ einfach mit einem Oszilloskop dargestellt werden kann. Die Datenauswertung erfolgt entweder auf dem Messgerät selbst oder im Nachgang auf der elektronischen Recheneinrichtung. Um ein Augendiagramm in einem Gerät im laufenden Betrieb zu erzeugen, ist insbesondere die entsprechende Erfassungseinrichtung als Messschaltung vorgesehen, und ein ausreichend dimensionierter Analog-Digital Converter (ADC) notwendig. Insbesondere handelt es sich bei dem Analog-Digital-Wandler um einen internen Mikrocontroller innerhalb der Messschaltung. Somit kann auf einfache Art und Weise das Augendiagramm erzeugt werden.

Ebenfalls vorteilhaft ist, wenn während der Erfassung des Signals eine Taktfrequenz der Schaltungsanordnung reduziert wird. Insbesondere handelt es sich bei dem Signal um ein Rechtecksignal, und das Messsystem beziehungsweise die Erfassungseinrichtung muss eine ausreichende Bandbreite abdecken. Je nach maximaler Clock-Frequenz, mit anderen Worten der Taktfrequenz der Schaltungsanordnung, des Signals kann diese variieren. Typische Taktfrequenzen starten dabei bei 100 kHz für beispielsweise einen I²C-Bus und können bei SPI bei bis zu 36 MHz liegen. Bei einer Abtastrate, die dem Zehnfachen der Frequenz des Signals entsprechen soll, erreicht man bei 36 MHz bereits die Grenzen der Praktikabilität, da dabei eine Abtastfrequenz von 360 MHz benötigt wird. Solche Abtastfrequenzen werden von den meisten mikrocontroller-internen Analog-Digital-Wandlern nicht mehr unterstützt, und es müsste ein externer Analog-Digital-Wandler zum Einsatz kommen. Hierbei kann jedoch die Reduzierung der Taktfrequenz für den Zeitraum der Messung Abhilfe schaffen, um hier die Anforderungen an die Messschaltung zu minimieren. Ebenso können auch Konzepte der Unterabtastung zum Einsatz kommen, um die benötigte Abtastrate weiter zu reduzieren. Somit kann auf einfache Art und Weise das Signal erfasst werden.

Ebenfalls vorteilhaft ist, wenn mittels eines neuronalen Netzwerks die Bewertung durchgeführt wird. Bei dem neuronalen Netzwerk handelt es sich insbesondere um ein faltendes neuronales Netzwerk. Insbesondere kann das faltende neuronale Netzwerk eine entsprechende Auswertung der Augendiagramme durchführen.

Eine weitere vorteilhafte Ausgestaltungsform sieht vor, dass auf Basis einer Wahrscheinlichkeitsdichtefunktion des Signals das Ist-Augendiagram und/oder das Soll-Augendiagram erzeugt wird. Insbesondere ist nach Abschluss einer Messung vorgesehen, dass die Daten in einem Signalprozessor zu dem Augendiagramm überlagert werden. Hierbei ist eine probabilistische Betrachtung der Daten von Vorteil. Je nach Anzahl der aufgenommenen Samples wird das Augendiagramm mit einem entsprechenden Wahrscheinlichkeitswert an der entsprechenden Stelle aufgefrischt. Das Diagramm bildet an einem bestimmten Ort, insbesondere Amplitude und Zeit, die Wahrscheinlichkeit eines vorhandenen Samples ab. Wurden viele Samples an einem Ort gesammelt, wird ein hoher Wert eingetragen, wurde kein oder wenige Samples an einer Stelle aufgenommen, folgt ein niedriger Wert. So entsteht eine zweidimensionale Wahrscheinlichkeitsdichteverteilung über eine Zeitdomäne. Bei erneuter Messung werden die Daten wieder über den entsprechenden Wahrscheinlichkeitswerten aufgefrischt. Nachdem das Augendiagramm erstellt oder erneuert wurde, kann auf Basis dessen eine Merkmalsextraktion durchgeführt werden. Diese Merkmale müssen je nach Anwendung gewählt werden. Für eine Zustandsüberwachung sind generelle Eigenschaften des Augendiagramms, wie beispielsweise die Augenweite oder dergleichen, zu bevorzugen. Somit kann zuverlässig die Bewertung des Zustands durchgeführt werden.

Ebenfalls vorteilhaft ist, wenn die Bewertung des elektronischen Bauteils in vordefinierten Zeitabständen durchgeführt wird. Insbesondere wird die Bewertung dauerhaft, insbesondere über den Lebenszyklus, des elektronischen Bauteils durchgeführt. Somit können zuverlässig der Gesundheitszustand und der Alterungszustand überwacht werden. Ferner kann auch ein Austausch des elektronischen Bauteils identifiziert werden. Dies erhöht die Authentizität der Schaltungsanordnung.

Bei dem vorgestellten Verfahren handelt es sich insbesondere um computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit einem Computerprogrammprodukt nach dem vorhergehenden Aspekt.

Ebenfalls betrifft die Erfindung eine Bewertungsvorrichtung zum Bewerten eines Zustands eines elektronischen Bauteils einer Schaltungsanordnung, mit zumindest einer elektronischen Recheneinrichtung und mit einer Erfassungseinrichtung, wobei die Bewertungsvorrichtung zum Durchführen eines Verfahrens nach dem vorhergehenden Aspekt ausgebildet ist. Insbesondere wird das Verfahren mittels der Bewertungsvorrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der Bewertungsvorrichtung anzusehen. Die Bewertungsvorrichtung weist hierzu gegenständliche Merkmale auf, um entsprechende Verfahrensschritte durchführen zu können.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DR_AM (englisch: "dynamic random access memory") oder statischer Speicher mit wahlfreiem Zugriff, SR_AM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Eine Verbindung zweier elektrischer oder elektronischer Komponenten kann, sofern nicht ausdrücklich anders angegeben, derart verstanden werden, dass eine elektrische Verbindung zwischen den Komponenten besteht oder durch Betätigung eines oder mehrerer Schaltelemente (der Schaltung/Anordnung/Gerät...) hergestellt werden kann. Insbesondere können die Komponenten direkt oder indirekt miteinander verbunden sein, sofern nicht anders angegeben. Dabei kann eine direkte Verbindung so verstanden werden, dass außer dem optionalen einen oder mehreren Schaltelementen keine weiteren elektrischen oder elektronischen Komponenten zwischen den Komponenten angeordnet sind, während eine indirekte Verbindung so verstanden werden kann, dass zusätzlich zu dem optionalen einen oder mehreren Schaltelementen eine oder mehrere weitere elektrische oder elektronische Komponenten, etwa Widerstände, Kondensatoren, Spulen und so weiter, zwischen den Komponenten angeordnet sind.

Algorithmen zur automatischen visuellen Wahrnehmung, die auch als Computer-Vision-Algorithmen, Algorithmen zum maschinellen Sehen oder Machine-Vision-Algorithmen bezeichnet werden können, können als Computeralgorithmen zur automatischen Durchführung einer visuellen Wahrnehmungsaufgabe betrachtet werden. Eine visuelle Wahrnehmungsaufgabe, die auch als Computer-Vision-Aufgabe bezeichnet wird, kann beispielsweise als eine Aufgabe zur Extraktion von visuellen Informationen aus Bilddaten verstanden werden. Insbesondere kann die visuelle Wahrnehmungsaufgabe in einigen Fällen prinzipiell von einem Menschen ausgeführt werden, der in der Lage ist, ein den Bilddaten entsprechendes Bild visuell wahrzunehmen. Im vorliegenden Zusammenhang werden visuelle Wahrnehmungsaufgaben jedoch auch automatisch durchgeführt, ohne dass die Unterstützung eines Menschen erforderlich ist.

Ein Computer-Vision-Algorithmus, beispielsweise zum Erfassen der Charakteristika im Augendiagram, kann beispielsweise einen Bildverarbeitungsalgorithmus oder einen Algorithmus zur Bildanalyse enthalten, der durch maschinelles Lernen trainiert wird oder wurde und beispielsweise auf einem künstlichen neuronalen Netzwerk, insbesondere einem faltenden neuronalen Netz, basieren kann. Der Computer-Vision-Algorithmus kann beispielsweise einen Objekterkennungsalgorithmus, einen Hinderniserkennungsalgorithmus, einen Objektverfolgungsalgorithmus, einen Klassifikationsalgorithmus einen semantischen Segmentierungsalgorithmus, und/oder einen Tiefenschätzalgorithmus umfassen.

Entsprechende Algorithmen können analog auch basierend auf anderen Eingabedaten als von einem Menschen visuell wahrnehmbaren Bildern durchgeführt werden. Beispielsweise können auch Punktwolken oder Bilder von Infrarotkameras, Lidarsystemen et cetera mittels entsprechend angepasster Computeralgorithmen ausgewertet werden. Streng genommen handelt es sich bei den entsprechenden Algorithmen nicht um Algorithmen zur visuellen Wahrnehmung, da die entsprechenden Sensoren in Bereichen arbeiten können, die visuell, also für das menschliche Auge, nicht wahrnehmbar sind, zum Beispiel im Infrarotbereich. Deshalb werden solche Algorithmen im Rahmen der vorliegenden Erfindung Algorithmen zur automatischen Wahrnehmung bezeichnet. Algorithmen zur automatischen Wahrnehmung schließen also Algorithmen zur automatischen visuellen Wahrnehmung ein, sind aber im Hinblick auf eine menschliche Wahrnehmung nicht auf diese beschränkt. Folglich kann ein Algorithmus zur automatischen Wahrnehmung nach diesem Verständnis einen Computeralgorithmus zur automatischen Durchführung einer Wahrnehmungsaufgabe enthalten, der beispielsweise durch maschinelles Lernen trainiert wird oder wurde und insbesondere auf einem künstlichen neuronalen Netzwerk basieren kann. Zu solchen verallgemeinerten Algorithmen zur automatischen Wahrnehmung können auch Objektdetektionsalgorithmen, Objektverfolgungsalgorithmen, Klassifizierungsalgorithmen und/oder Segmentierungsalgorithmen, zum Beispiel semantische Segmentierungsalgorithmen, gehören.

Falls ein künstliches neuronales Netzwerk zur Implementierung eines Algorithmus zur automatischen visuellen Wahrnehmung verwendet wird, ist eine häufig eingesetzte Architektur die eines faltendes neuronales Netzwerks, CNN. Insbesondere kann ein 2D-CNN auf entsprechende 2D-Kamerabilder angewendet werden. Auch für andere Algorithmen zur automatischen Wahrnehmung können CNNs verwendet werden. Beispielsweise können 3D-CNNs, 2D-CNNs oder 1D-CNNs auf Punktwolken angewendet werden, abhängig von den räumlichen Dimensionen der Punktwolke und den Details der Verarbeitung.

Das Ergebnis oder die Ausgabe eines Algorithmus zur automatischen Wahrnehmung ist abhängig von der spezifischen zugrundeliegenden Wahrnehmungsaufgabe. Beispielsweise kann die Ausgabe eines Objekterkennungsalgorithmus eine oder mehrere Begrenzungsboxen enthalten, die eine räumliche Position und optional eine Orientierung eines oder mehrerer entsprechender Objekte in der Umgebung und/oder entsprechende Objektklassen für das eine oder die mehreren Objekte definieren. Eine Ausgabe eines semantischen Segmentierungsalgorithmus, der auf ein Kamerabild angewendet wird, kann eine Klasse auf Pixelebene für jedes Pixel des Kamerabildes enthalten. Analog dazu kann eine Ausgabe eines semantischen Segmentierungsalgorithmus, der auf eine Punktwolke angewendet wird, eine entsprechende Punktebenen-Klasse für jeden der Punkte enthalten. Die Klassen auf Pixelebene beziehungsweise auf Punktebene können beispielsweise einen Objekttyp definieren, zu dem der jeweilige Pixel oder Punkt gehört.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.
- FIG 1: ein schematisches Blockschaltbild gemäß einer Ausführungsform einer Schaltungsanordnung;
- FIG 2: zwei schematische Diagramme zur Erzeugung eines Augendiagramms;
- FIG 3: ein weiteres schematisches Blockschaltbild gemäß einer Ausführungsform einer Schaltungsanordnung; und
- FIG 4: eine schematische Darstellung von Alterungseffekten eines elektronischen Bauteils.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

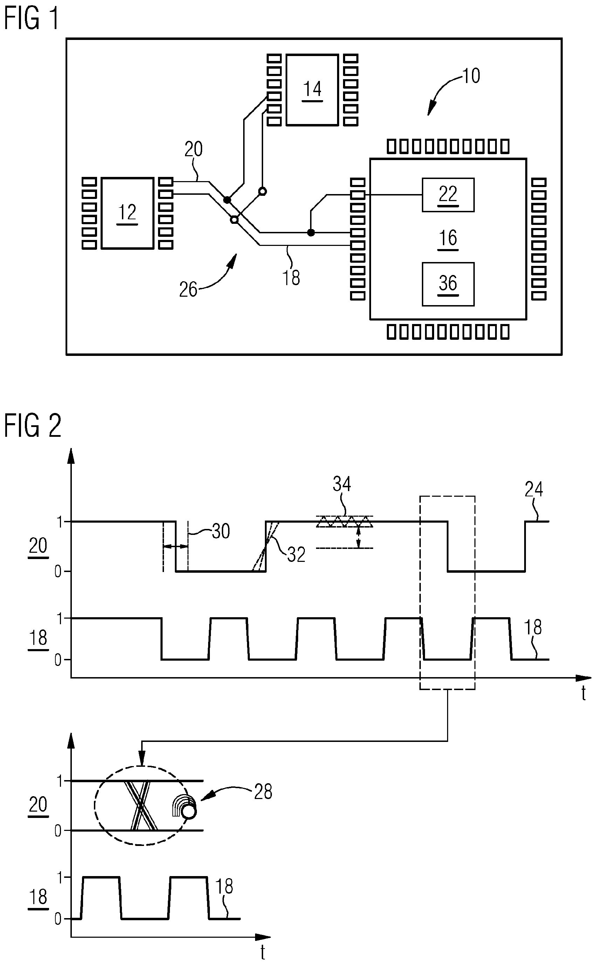

FIG 1 zeigt ein schematisches Blockschaltbild gemäß einer Ausführungsform einer Schaltungsanordnung 10. Die Schaltungsanordnung 10 weist vorliegend ein erstes elektronisches Bauteil 12 sowie ein zweites elektronisches Bauteil 14 auf. Beispielsweise können die elektronischen Bauteile 12, 14 Sensoren sein. Die Sensoren sind wiederum mit einer Bewertungsvorrichtung 16 der Schaltungsanordnung 10 gekoppelt. Die Schaltungsanordnung 10 weist ferner ein Taktsignal 18 sowie eine Datenleitung 20 auf. Jedes der elektronischen Bauteile 12, 14 ist wiederum mit dem Taktsignal 18 sowie mit der Datenleitung 20 gekoppelt. Ferner ist noch ein Eingang für einen Analog-Digital-Wandler 22 gezeigt. Im vorliegenden Ausführungsbeispiel ist insbesondere gezeigt, dass die elektronischen Bauteile 12, 14 über einen I²C-Bus mit der Bewertungsvorrichtung 16 gekoppelt sind.

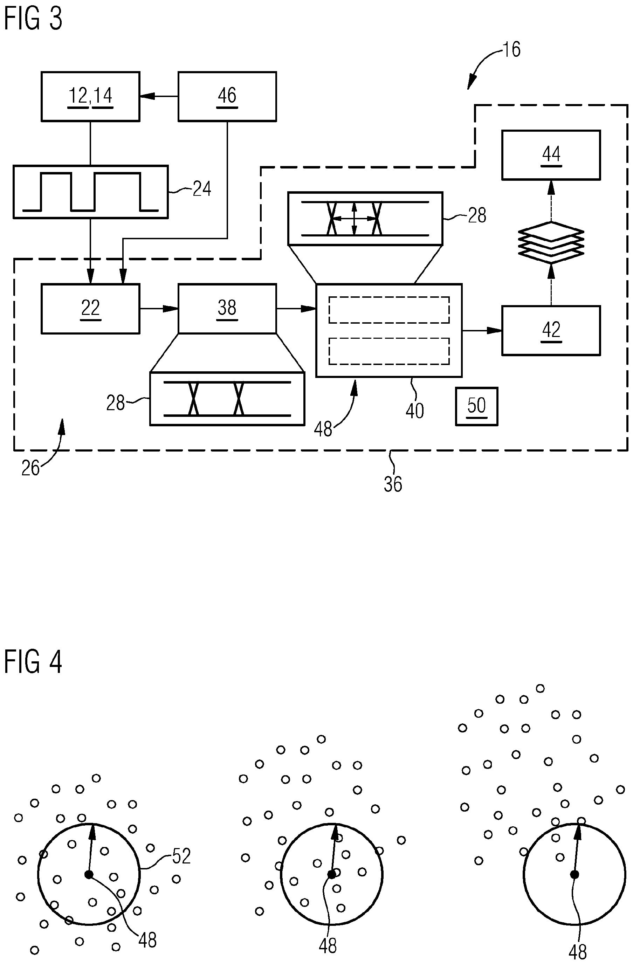

Insbesondere kann somit im folgenden Ausführungsbeispiel von einer Taktfrequenz für ein Signal 24 (FIG 3) von 100 kHz ausgegangen werden. Daraus folgt wiederum eine native Wahl der Abtastfrequenz von 1 MHz für eine entsprechende Erfassungseinrichtung 26 der Schaltungsanordnung 10. Die Auflösung beträgt bei den meisten Analog-Digital-Wandlern 22 mindestens 10 Bit. Von einer weiteren externen Verschaltung mit Operationsverstärkern zur Impedanz-Wandlung oder Verstärkung kann in den meisten Fällen daher abgesehen werden, da die maximale Eingangsspannung kleiner der internen Referenzspannung ist.

FIG 2 zeigt zwei schematische Diagramme zum Erzeugen eines Augendiagramms 28. Insbesondere ist im oberen Diagramm auf der x-Achse die Zeit t aufgetragen und auf der y-Achse die Amplitude. Insbesondere zeigt das obere Diagramm das Signal 24 über die Datenleitung 20 und die Taktfrequenz 18. Insbesondere ist ein Rechtecksignal dargestellt, welches zwischen 0 und 1 springt. Dabei weist beispielsweise das Signal 24 einen Jitter 30 und/oder eine spezifische Flankensteilheit 32 sowie eine Verzerrung beziehungsweise ein Signal-zu-Signal-Rauschverhältnis 34 auf. Im unteren Teil der FIG 2 ist wiederum gezeigt, wie auf Basis des oberen Diagramms wiederum das Augendiagramm 28 erzeugt werden kann.

Insbesondere zeigt somit die FIG 2, dass das Augendiagramm 28 für verschiedene Analysen herangezogen werden kann. Im klassischen Sinne wird ein Augendiagramm 28 dazu genutzt, um die Signalqualität einer hochfrequenten digitalen Datenübertragung zu beurteilen. Dies wird durch die analysespezifischen Amplituden- und Timing-Merkmale des Augendiagramms 28 erreicht, wie zum Beispiel die Augenamplitude oder die Augenöffnung oder die Augenbreite. Diese Merkmale lassen eine Beurteilung der Übertragungsqualität des Kanals zu und ist somit ein Indikator für die korrekte Funktionalität eines elektronischen Bauteils 12, 14. Eine Überprüfung des Augendiagramms 28 wird deshalb häufig bei einer Warenausgangsprüfung durchgeführt. Das Augendiagramm 28 hat viele Einflussgrößen, dazu gehören neben generell unerwünschten Einflussgrößen, wie Temperatur und Alterung, auch baugruppen- beziehungsweise komponentenspezifische Eigenschaften. Zu diesen Eigenschaften gehören unter anderem parasitärer Kapazität oder Widerstand, Leitungslänge oder Reaktionszeit von Komponenten.

Da es sich bei dem Signal 24 um ein Rechtecksignal handelt, muss das Messsystem eine ausreichende Bandbreite abdecken können. Je nach maximaler Taktfrequenz 18 des Signals 24 kann diese variieren. Typische Taktfrequenzen 24 starten dabei bei 100 kHz für I2C und können bei SPI bei bis zu 36 MHz liegen. Bei einer Abtastrate, die dem Zehnfachen der Frequenz des Signals 24 entsprechen soll, erreicht man bei 36 MHz schnell die Grenzen der Praktikabilität, da in etwa eine Abtastfrequenz von 360 MHz benötigt würde. Solche Abtastfrequenzen werden von den meisten Mikrocontroller-internen Analog-Digital-Wandlern 22 nicht mehr unterstützt, und es müsste ein externer Analog-Digital-Wandler 22 zum Einsatz kommen. Eine vorteilhafte Lösung besteht darin, dass die Taktfrequenz 18 für den Zeitraum der Erfassung reduziert wird, um die Anforderung an die Messschaltung zu minimieren. Ebenso können Konzepte der Unterabtastung zum Einsatz kommen, um die benötigte Abtastrate weiter zu reduzieren.

FIG 3 zeigt ein weiteres schematisches Blockschaltbild gemäß einer Ausführungsform der Schaltungsanordnung 10. Insbesondere zeigt die FIG 3 eine elektronische Recheneinrichtung 36. Die elektronische Recheneinrichtung 36 weist wiederum einen Signalprozessor 38, einen Merkmalsextraktor 40, eine Einzelbildextraktion 42 sowie einen Verifizierer 44 auf. Des Weiteren ist noch ein Augendiagrammcontroller 46 gezeigt.

Insbesondere zeigt somit die FIG 3 eine Schaltungsanordnung 10, mittels welcher ein Verfahren zum Bewerten eines Zustands des elektronischen Bauteils 12, 14 durchgeführt werden kann. Insbesondere wird dabei ein Soll-Augendiagramm 48 für das elektronische Bauteil 12, 14 mittels der elektronischen Recheneinrichtung 36 vorgegeben. Es wird zumindest das aktuelle Signal 24 des elektronischen Bauteils 12, 14 mittels der Erfassungseinrichtung 26 erfasst. Es wird das aktuelle Ist-Augendiagramm 28 des elektronischen Bauteils 12, 14 in Abhängigkeit von dem erfassten aktuellen Signal 24 erzeugt. Das Soll-Augendiagramm 48 wird mit dem Ist-Augendiagramm 28 verglichen. Es erfolgt dann wiederum eine Bewertung des Zustands in Abhängigkeit von dem Vergleich mittels der elektronischen Recheneinrichtung 36.

Insbesondere ist vorgesehen, dass der Augendiagrammcontroller 46 ein Startsignal an den Analog-Digital-Wandler 22, insbesondere der Erfassungseinrichtung 26, gibt. Gleichzeitig wird beim elektronischen Bauteil 12, 14 wiederum das Signal 24 abgefragt. Das Signal 24 wird wiederum auf Basis des Augendiagrammcontrollers 46 synchronisiert. Im Signalprozessor 38 wird wiederum das Augendiagramm 28 erzeugt. In der Merkmalsextraktion werden wiederum Augengröße, Augenbreite sowie die Augenamplitude ermittelt. Auf Basis der Merkmalsextraktion kann wiederum eine Identifizierung des elektronischen Bauteils 12, 14 oder auch der Alterungszustand beziehungsweise der Gesundheitszustand des elektronischen Bauteils 12, 14 ermittelt werden. In vorgegebenen Zeitabständen kann über den Einzelbildextraktor 42 wiederum ein Augendiagramm 28 genutzt werden, um beispielsweise das Soll-Augendiagramm 48 anzupassen. Hierbei kann insbesondere der Verifizierer 44 genutzt werden, der sowohl remote als auch lokal bereitgestellt werden kann.

Insbesondere zeigt die FIG 3, dass der Augendiagrammcontroller 46 beispielsweise ein Teil der Schaltungsanordnung 10 ist, welcher die Quell-Signalerzeugung auf dem Bus durch die elektronischen Bauteile 12, 14 sowie die Messung des Signals 24 mit dem Analog-Digital-Wandler 22 koordiniert. Nach Abschluss der Messung werden die Daten im Signalprozessor 38 zu dem Augendiagramm 28 überlagert. Hierbei ist eine probabilistische Betrachtung der Daten von Vorteil. Je nach Anzahl der aufgenommenen Samples wird das Augendiagramm 28 mit einem entsprechenden Wahrscheinlichkeitswert an der entsprechenden Stelle aufgefrischt. Das Augendiagramm 28 bildet an einem bestimmten Ort (Amplitude/Zeit) die Wahrscheinlichkeit eines vorhandenen Samples ab. Wurden viele Samples an einem Ort gesammelt, wird ein hoher Wert eingetragen, wurde kein oder wenige Samples an einer Stelle aufgenommen, folgt ein niedriger Wert. So entsteht eine zweidimensionale Wahrscheinlichkeitsdichteverteilung über die Zeitdomäne. Bei erneuter Messung werden die Daten wieder über den entsprechenden Wahrscheinlichkeitswerten aufgefrischt. Nachdem das Augendiagramm erstellt oder erneuert wurde, kann auf Basis dessen eine Merkmalsextraktion durchgeführt werden. Diese Merkmale müssen je nach Anwendung gewählt werden. Für eine Zustandsüberwachung sind generelle Eigenschaften des Augendiagramms, wie Augenweite oder dergleichen, zu bevorzugen. Für die Identifizierung einer bestimmten Hardware können dagegen andere Features genutzt werden. Ein neuronales Netz, insbesondere ein faltendes neuronales Netz, eignet sich zum Beispiel zur Klassifizierung des Augendiagramms 28 sehr vorteilhaft.

Um die Veränderung des elektronischen Bauteils 12, 14 über einen Zeitraum abbilden zu können, kann in regelmäßigen Abständen ein Einzelbild des Augendiagramms 28 beziehungsweise dessen Merkmale erstellt werden. Für die Zustandsüberwachung des elektronischen Bauteils 12, 14 kann hieraus abgeleitet werden, ob eine Degradierung des Signals 24 und damit der entsprechenden Hardware-Merkmale entstanden ist. Auf Basis dieser Daten kann ein frühzeitiges Versagen der überwachten Komponenten erkannt werden. Diese Überwachung kann durch den Verifizierer 44, welcher sich entweder auf dem elektronischen Bauteil 12, 14 selbst befindet, ein Edge-Device oder einer Cloud anhand der Daten durchgeführt werden.

Um die Identifizierung/Authentifizierung der Hardware auch bei der Alterung der Hardware zu gewährleisten, muss der Alterungsprozess mitabgebildet werden. Hierzu kann beispielsweise ein Fuzzy-Extraktor 50 verwendet werden.

FIG 4 zeigt ein schematisches Bild zur Merkmalsextraktion mittels des Fuzzy-Extraktors 50. Insbesondere ist in der FIG 4 das Problem der veränderten Merkmale durch die Alterung bei dem Fuzzy-Extraktor 50 gezeigt. Im linken Teil des Bilds befinden sich die erfassten Merkmale, welche durch Punkte dargestellt sind, innerhalb eines Kreises 52 und sind somit eine valide Eingabe. Bei dem Zentrum des Kreises 52 handelt es sich insbesondere wiederum um ein erfasstes Merkmal des Soll-Augendiagramms 48. Von links nach rechts wiederum verschieben sich die entsprechenden Merkmale immer weiter, sodass im rechten Teilbereich der FIG 4 keine Nutzung des Fuzzy-Extraktors 50 mehr möglich ist.

Insbesondere wird nämlich der Fuzzy-Extraktor 50 dazu genutzt, um aus verrauschten Daten einen zur Identifizierung beziehungsweise Authentifizierung geeigneten Schlüssel zu erzeugen. Es gehört zu den Eigenschaften des Fuzzy-Extraktors 50, dass er eine gewisse Fehlertoleranz aufweist. Je nach Alterungsgrad des elektronischen Bauteils 12, 14 kann es allerdings dazu kommen, dass der mit dem beim Enrollment erzeugten Feature erstellte Fuzzy-Extraktor 50, mit anderen Worten der mittels des Soll-Augendiagramms 48 erzeugte Fuzzy-Extraktor 50, nicht mehr genutzt werden kann, da sich die statistische Verteilung der Merkmale langsam und kontinuierlich aus der Ursprungsverteilung bewegt. Um dies zu verhindern, ist es notwendig, den während des Enrollment erzeugten Mittelpunkt der validen Features regelmäßig zu korrigieren, um dadurch Alterungseffekte auszugleichen.

Durch die genannten technischen Maßnahmen kann somit sichergestellt werden, dass nur vertrauenswürdige Peripherie an das Gerät, beispielsweise eine Auswerteeinrichtung, angeschlossen wird beziehungsweise keine bösartigen Komponenten über den Lebenszyklus des elektronischen Bauteils 12, 14 verbaut werden. Ebenso ist es möglich, die Alterung von elektronischen Bauteilen 12, 14 zu erfassen und entsprechende Wartungsarbeiten zu organisieren.

## Patentansprüche

1. Verfahren zum Bewerten eines Zustands eines elektronischen Bauteils (12, 14) einer Schaltungsanordnung (10) mittels einer Bewertungsvorrichtung (16), mit den Schritten:
- Vorgeben eines Soll-Augendiagramms (48) für das elektronische Bauteil (12, 14) mittels einer elektronischen Recheneinrichtung (36) der Bewertungsvorrichtung (16);
- Erfassen von zumindest einem aktuellen Signal (24) des elektronischen Bauteils (12, 14) mittels einer Erfassungseinrichtung (26) der Bewertungsvorrichtung (16);
- Erzeugen eines aktuellen Ist-Augendiagramms (28) des elektronischen Bauteils (12, 14) in Abhängigkeit von dem erfassten, aktuellen Signal (24) mittels der elektronischen Recheneinrichtung (36);
- Vergleichen des Soll-Augendiagramms (48) mit dem Ist-Augendiagramm (28) mittels der elektronischen Recheneinrichtung (36); und
- Bewerten des Zustands in Abhängigkeit von dem Vergleich mittels der elektronischen Recheneinrichtung (36).

2. Verfahren nach Anspruch 1, **dadurch gekennzeichnet, dass** ein Alterungszustand des elektronischen Bauteils (12, 14) als der Zustand bewertet wird.

3. Verfahren nach Anspruch 1 oder 2, **dadurch gekennzeichnet, dass**
ein Gesundheitszustand des elektronischen Bauteils (12, 14) als der Zustand bewertet wird.

4. Verfahren nach einem der vorhergehenden Ansprüche, **dadurch gekennzeichnet, dass**
auf Basis des Vergleichs das elektronische Bauteil (12, 14) identifiziert wird.

5. Verfahren nach Anspruch 4, **dadurch gekennzeichnet, dass** zur Identifizierung des elektronischen Bauteils (12, 14) das Soll-Augendiagramm (48) in Abhängigkeit von einem bestimmten Alterungszustand angepasst wird.

6. Verfahren nach Anspruch 4 oder 5, **dadurch gekennzeichnet, dass**
mittels eines Fuzzy-Extraktors (50) die Identifizierung und/oder Authentifizierung durchgeführt wird.

7. Verfahren nach einem der vorhergehenden Ansprüche, **dadurch gekennzeichnet, dass**
auf Basis einer Augenamplitude im Augendiagram (28) und/oder einer Augenöffnung im Augendiagramm (28) und/oder einer Augenbreite des Augendiagrams (28) der Vergleich durchgeführt wird.

8. Verfahren nach einem der vorhergehenden Ansprüche, **dadurch gekennzeichnet, dass**
das Signal mittels eines Analog-Digital-Wandlers (22) erfasst wird.

9. Verfahren nach einem der vorhergehenden Ansprüche, **dadurch gekennzeichnet, dass**
während der Erfassung des Signals eine Taktfrequenz (18) der Schaltungsanordnung (10) reduziert wird.

10. Verfahren nach einem der vorhergehenden Ansprüche, **dadurch gekennzeichnet, dass**
mittels eines neuronalen Netzwerks die Bewertung durchgeführt wird.

11. Verfahren nach einem der vorhergehenden Ansprüche, **dadurch gekennzeichnet, dass**
auf Basis einer Wahrscheinlichkeitsdichtefunktion des Signals (24) das Ist-Augendiagram (28) und/oder das Soll-Augendiagram (48) erzeugt wird.

12. Verfahren nach einem der vorhergehenden Ansprüche, **dadurch gekennzeichnet, dass**
die Bewertung des elektronischen Bauteils (12, 14) in vordefinierten Zeitabständen durchgeführt wird.

13. Computerprogrammprodukt mit Programmcodemitteln, welche eine elektronische Recheneinrichtung (36) dazu veranlasst, wenn die Programmcodemittel von der elektronischen Recheneinrichtung (36) abgearbeitet werden, ein Verfahren nach einem der Ansprüche 1 bis 12 durchzuführen.

14. Computerlesbares Speichermedium mit einem Computerprogrammprodukt nach Anspruch 13.

15. Bewertungsvorrichtung (16) zum Bewerten eines Zustands eines elektronischen Bauteils (12, 14) einer Schaltungsanordnung (10), mit zumindest einer elektronischen Recheneinrichtung (36) und mit einer Erfassungseinrichtung (26), wobei die Bewertungsvorrichtung (16) zum Durchführen eines Verfahrens nach einem der Ansprüche 1 bis 12 ausgebildet ist.
